# EUROPEAN PATENT SPECIFICATION

(11) **EP 4 122 904 B1**
(45) Date of publication and mention of the grant of the patent: **24.12.2025**
(21) Application number: 22186474.7
(22) Date of filing: 22.07.2022
(51) Int. Cl.: C04B 41/85, C04B 41/89, F01D 5/28

(54) **METHOD OF MARKING CERAMIC MATRIX COMPOSITES AND ARTICLES MANUFACTURED THEREFROM**
VERFAHREN ZUR MARKIERUNG VON VERBUNDWERKSTOFFEN MIT KERAMISCHER MATRIX UND DARAUS HERGESTELLTE GEGENSTÄNDE
PROCÉDÉ DE MARQUAGE DE COMPOSITES À MATRICE CÉRAMIQUE ET ARTICLES FABRIQUÉS À PARTIR DE CEUX-CI

(30) Priority: 23.07.2021 US 202163225052 P
(43) Date of publication of application: 25.01.2023
(73) Proprietor: RTX Corporation, Farmington, CT 06032 (US)
(72) Inventor: KONOPASKE, Zachary P., West Hartford, 06119 (US); JACKSON, Richard Wesley, Mystic, 06355 (US)
(74) Representative: Dehns

(56) References cited:
- US-A1- 2005 082 725
- US-A1- 2011 027 470
- US-A1- 2019 062 890

## Description

### BACKGROUND

Disclosed herein is a method of marking ceramic matrix composite articles. More specifically disclosed herein is a method that details the durable marking of ceramic matrix composite articles. Disclosed herein too are articles manufactured from the process.

Manufactured parts are often marked with identifying symbols, codes or numerals so that they can be easily identified for further use. Markings facilitate ease of inventory control as parts bearing an identical marking can be stored in common locations. In addition, marking of parts prevents accidental use of parts on the wrong assembly line or on the wrong article of commerce. Accurate marking of manufactured parts therefore plays an important role in commerce by facilitating speed of storage, assembly and maintenance of articles of commerce.

Ceramic matrix composites (CMCs) are used in a wide variety of high temperature, high stress, high performance applications such as in power generation turbines, aircraft engine turbines, and the like. These composites are particularly useful because of their high temperature capabilities and light weight. Ceramic matrix composites are manufactured by infiltrating a preform with a matrix material to form the matrix.

Marking of CMCs poses challenges that marking of metals does not. Traditional approaches for marking metal parts can include mechanical methods like dot peening which would cause damage to a CMC because of the brittle surfaces of CMCs. Additionally, the higher temperature environments for using CMCs (such as in turbines) relative to most metal parts causes challenges when ink and pencil marking is used. Ink and pencil formulations are generally not formulated to withstand these higher temperature conditions.

It is therefore desirable to devise methods and compositions that can be used for marking CMCs, which can withstand extended durations at high temperatures in unfavorable environments.

US 2019/062890 A1 discloses a prior art article as set forth in the preamble of claim 1.

US 2005/082725 A1 discloses prior art production of zirconia products.

US 2011/027470 A1 discloses prior art methods for making environmental barrier coatings using sintering aids.

### SUMMARY

In one aspect, there is provided an article as recited in claim 1.

There is also provided a method of marking a ceramic matrix composite as recited in claim 9.

There is also provided a method of identifying an article as recited in claim 15.

Features of embodiments are set forth in the dependent claim.

### BRIEF DESCRIPTION OF THE FIGURES

FIG. 1A depicts a metal oxide layer disposed directly on a CMC substrate prior to laser ablation;
FIG. 1B depicts a metal oxide layer disposed directly on a bond coat that contacts a CMC substrate prior to laser ablation;
FIG. 2A depicts a single metal oxide layer disposed directly on the CMC substrate that has been subjected to laser ablation;
FIG. 2B depicts a single metal oxide layer disposed on the optional bond coat which is itself in contact with the CMC substrate that has been subjected to laser ablation;
FIG. 3A depicts one method of performing the marking on a metal oxide layer; and
FIG. 3B depicts another method of performing the marking on the metal oxide layer.

### DETAILED DESCRIPTION

Disclosed herein are articles that have disposed on them a suitable composition that can be marked for purposes of identification. The composition includes a multilayered composite that comprises a metal oxide layer on a CMC substrate, where the metal oxide layer has a different refractive index from that of the matrix used in the CMC substrate. When regions of the metal oxide are removed via laser ablation, the difference in refractive indices between the remaining regions of metal oxide and the exposed regions of CMC surface creates a pattern with sufficient contrast between the markings and their surroundings that facilitate recognition even after extended periods of time at elevated temperatures. In addition, reflections of light from the markings also facilitate identification and recognition after extended periods of time at elevated temperatures. In an embodiment, the markings can be deciphered because of an optical contrast created due to the difference in light reflected from the metal oxide versus that reflected from the matrix material used in the CMC.

The composition and the marking made thereon can withstand adverse conditions (e.g., high temperature, high energy electromagnetic radiation, and the like) during manufacturing and during use (e.g., high temperatures, high stresses, corrosive environments, and the like) for extended periods of time. This ability to withstand a high temperature, high energy marking process followed by survival in adverse conditions for extended periods facilitates ease of storage, maintenance and replacement of such marked parts when needed.

Disclosed herein too is a method of marking the article using laser ablation. The method comprises disposing a layer of a metal oxide on the CMC surface such that the reflectivity of the metal oxide is different from the reflectivity of the CMC. The reflectivity of the metal oxide is different from the reflectivity of the matrix used in the CMC. The metal oxide is preferably one that has a greater reflectivity from that of the matrix material used in the CMC, such as, for example, a rare earth oxide. In an embodiment, the metal oxide has a diffuse reflectivity for incident light with wavelengths between 400 and 700 nm that is at least two times greater than the diffuse reflectivity of the matrix used in the ceramic matrix composite.

In another embodiment, the metal oxide is a rare earth metal oxide that has a diffuse reflectivity for incident light with wavelength between 400 and 700 nm that is at least two times greater than the diffuse reflectivity of the matrix used in the ceramic matrix composite. Upon ablating the rare earth metal oxide with a laser, an optical contrast is created due to the difference in light reflected from the metal oxide versus that reflected from the matrix material used in the CMC. This optical contrast facilitates identifying the marking and hence the article.

Laser ablation methods have been used in the past to mark article surfaces. These methods have traditionally relied on changing the structure of the ceramic surface via ridges and valleys to create (light and dark) contrast. These micro-scale structures however, are prone to oxidation over time which can significantly reduce contrast. This makes the part identification difficult especially after extended periods of time when the marking has substantially disappeared. This problem can be alleviated by disposing a metal oxide on a CMC substrate, where the metal oxide has a substantially different refractive index from that of the matrix (and hence the CMC) and ablating the metal oxide down to the surface of the CMC. In one embodiment, a bond coat can be applied to the CMC surface and the metal oxide can be disposed on the bond coat. The laser ablation then may be used to ablate the metal oxide and a portion of the bond coat thereby preventing the CMC surface from damage.

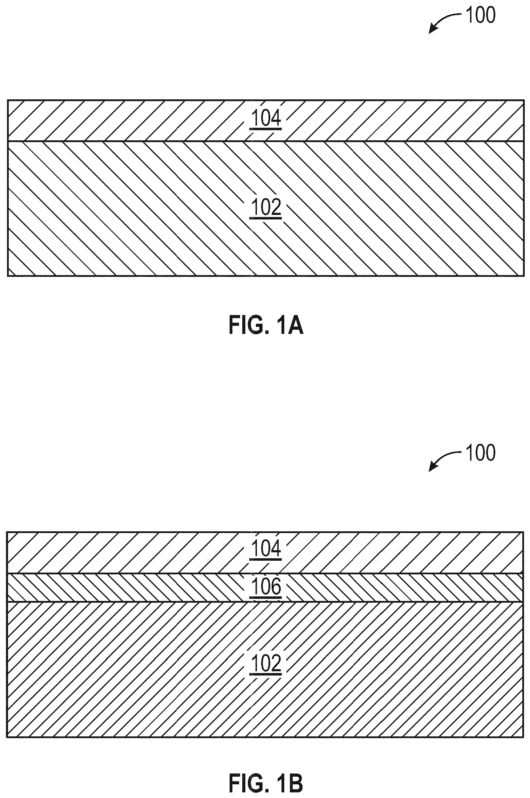

FIGS. 1A is a depiction of an article 100 that comprises a CMC substrate 102 upon which is disposed a metal oxide layer 104. The metal oxide layer 104 has a different refractive index from the matrix material used in the CMC substrate 102. In the FIG. 1A, the metal oxide layer 104 is directly disposed on the CMC substrate 102. FIG. 1B depicts the article 100 with three layers-a CMC substrate 102 upon which is disposed an optional bond coat layer 106 and upon which is disposed the metal oxide layer 104. In an embodiment, the optional bond coat layer 106 is disposed between the metal oxide layer 104 and the CMC substrate 102 and is in direct contact with both of them (on its opposing faces).

Layered structures define a wide variety of construction arrangements, including lightweight laminated composite articles. Laminated composites typically are defined by a continuous, essentially planar array of continuous fibers embedded in a matrix defining a lamina or ply, a plurality of plies forming a laminate composite. These composite articles can be arranged to meet various in-plane stiffness or strength needs by appropriate stacking of similar orthotropic plies of dissimilar orientation. Ceramic matrix composites generally comprise fibers that comprise silicon carbide, oxide ceramics and carbon. Exemplary matrix materials include SiC, Al₂O₃, BN, B₄C, Si₃N₄, MoSi₂, SiO₂, SiOC, SiNC SiONC, ZrC, HfC, or a combination thereof. An exemplary combination of fiber and matrix (in a CMC) is silicon carbide fibers and a silicon carbide matrix.

The refractive index for the CMC substrate 102 is different from the refractive index of the metal oxide layer 104. The refractive index can be measured in different wavelengths of the electromagnetic spectrum. For practical reasons however it is desirable that the refractive index of the CMC substrate 102 is different from the refractive index of the metal oxide layer in the visible region of the electromagnetic spectrum and in the infrared region of the electromagnetic spectrum. The refractive index of the CMC substrate can be lower or higher than the refractive index of the metal oxide layer.

The refractive index of the CMC composite or of the CMC matrix (the matrix material used in the CMC composite) can be about 1.4 to 4.0, preferably 1.44 to 3.2, preferably 1.5 to 3.0 in the visible region of electromagnetic radiation.

The metal oxide layer 104 is disposed directly on the CMC substrate 102 (see FIG. 1A) or on the bond coat layer 106 that contacts the CMC substrate (see FIG. 1B). It is desirable for the metal oxide to form covalent or ionic bonds with oxides that form on the CMC substrate or on the bond coat substrate. These bonds prevent delamination or cracking of the metal oxide layer when subjected to elevated temperatures because of the inherent different coefficients of thermal expansion for the CMC substrate, the bond coat and the metal oxide layer. It is further desirable to use a metal oxide that has a coefficient of thermal expansion that is substantially close to that of the CMC material (the CMC composite as a whole or the matrix material) and/or the bond coat so that cracking and/or delamination is avoided.

The metal oxide can preferably undergo laser ablation without undergoing degradation or cracking. It is preferable for the metal oxide to not generate compounds that can degrade the CMC during the laser ablation process. For this reason, it is desirable to use metal oxides that are free from halogens, nitrates, sulfates, phosphates, or a combination thereof. The metal oxide layer 104 comprises a metal oxide that has a different refractive index from that of the CMC matrix.

Examples of metal oxides that may be used for the metal oxide layer include silicates, aluminates, titanates, zirconates, perovskites, rare earth metal oxides, and so forth that can bond with silicates, aluminates, and the like formed on the surface of the CMC composite.

Exemplary metal oxides include silicates, zirconates, titanates, aluminates, stannates, niobates, tantalates and rare earth oxides. Exemplary inorganic oxides include silica, aluminum oxide, silicon dioxide, calcium oxide, cerium oxide, copper oxide, titanium oxide, zinc oxide, zirconium oxide, tantalum oxide, niobium oxide, yttrium oxide, magnesium oxide, Mg₂SiO₄, MgO, CaTiO₃, MgZrSrTiO₆, MgTiO₃, MgAl₂O₄, WO₃, SnTiO₄, ZrTiO₄, CaSiO₃, CaSnO₃, CaWO₄, CaZrO₃, MgTa₂O₆, MgZrO₃, MnO₂, PbO, Bi₂O₃ and La₂O₃, CaZrO₃, BaZrO₃, SrZrO₃, BaSnO₃, CaSnO₃, MgSnO₃, Bi₂O₃/2SnO₂, Nd₂O₃, Pr₇O₁₁, Yb₂O₃, Ho₂O₃, La₂O₃, MgNb₂O₆, SrNb₂O₆, BaNb₂O₆, MgTa₂O₆, BaTa₂O₆, Ta₂O₃, or the like, or a combination thereof. Exemplary metal oxides include Mg₂SiO₄, MgO, CaTiO₃, MgZrSrTiO₆, MgTiO₃, MgAl₂O₄, MgTa₂O₆, MgZrO₃, or the like, or a combination thereof.

Silicates are preferred. Silicates that may be used in the metal oxide layer are preferably from Group 2A of the Periodic Table, i.e., berrylium (Be), magnesium (Mg), calcium (Ca), strontium (Sr), barium (Ba) and radium (Ra). Preferred metal silicates include Mg₂SiO₄, CaSiO₃, BaSiO₃ and SrSiO₃. In addition to Group 2A metals, the present metal silicates may include metals from Group 1A, i.e., lithium (Li), sodium (Na), potassium (K), rubidium (Rb), cesium (Cs) and francium (Fr). For example, metal silicates may include sodium silicates such as Na₂SiO₃ and NaSiO₃-5H₂O, lithium silicates such as LiAlSiO₄, Li₂SiO₃ and Li₄SiO₄. Additional metal silicates may include Al₂Si₂O₇, ZrSiO₄, KAlSi₃O₈, NaAlSi₃O₈, CaAl₂Si₂O₈, CaMgSi₂O₆, BaTiSi₃O₉, Zn₂SiO₄ or a combination thereof.

The rare-earth elements, also called the rare-earth metals or the lanthanides (yttrium and scandium are included as rare-earths) are a set of 17 nearly indistinguishable lustrous silvery-white soft heavy metals. Scandium and yttrium are considered rare-earth elements because they tend to occur in the same ore deposits as the lanthanides and exhibit similar chemical properties but have different electronic and magnetic properties. Rare earth oxides include oxides of lanthanum, cerium, praseodymium, neodymium, promethium, samarium, europium, gadolinium, terbium, dysprosium, holmium, erbium, thulium, ytterbium, lutetium, scandium, yttrium, or a combination thereof.

The rare earth oxide has a refractive index that is different from that of the CMC. The rare earth oxides generally have refractive index values of 1.5 to 2.7, preferably 1.7 to 2.3 and more preferably 1.8 to 2.2. For example, La₂O₃ has a refractive index ranging from 1.85 to 1.95 with increasing thickness, Pr₆O₁₁ from 1.92 to 2.05, also with increasing thickness, and Nd₂O₃ with a value of refractive of *n* = 2.05. Rare earth metal oxides are preferred for use in the metal oxide layer 104.

The metal oxide layer 104 is disposed on the CMC substrate 102 via a sol gel reaction, a slurry, or alternatively, the metal oxide layer 104 is preformed and disposed directly on the CMC substrate.

The metal oxide layer 104 may have a thickness of 0.025 to 0.8 millimeters, preferably 0.05 to 0.5 millimeters, preferably 0.1 to 0.4 millimeters.

The bond coat 106 is an optional layer and may be used on those occasions when it is desirable to protect the CMC composite 102 from the effects of laser ablation. The bond coat 106 is used to permit the laser ablation to remove a portion of the metal oxide layer 104 and a portion of the bond coat 106 without penetrating or disturbing the CMC substrate 102.

The bond coating 106 prevents the CMC substrate 102 from oxidation in a range of temperatures from room temperature to up to at least about 3000° F (1650° C) and greater. The bond coating is an exemplary protective coating that take advantages of glass materials having low melting point temperatures in combination with oxygen scavenging additives to achieve high mechanical and oxidation resistant properties suitable for the refractory based substrate.

A process for applying an oxidation resistant coating may comprise mixing at least about 10% by volume to up to about 99% by volume of at least one silica based material and at least about 1% by volume to up to about 90% by volume of at least one oxygen scavenger in a liquid medium to form a slurry. Suitable liquid media include water, alcohols, binders, terpineol, or a combination thereof.

The binders may be organic-based liquid media such as acrylic polymers, or alternatively, inorganic-based such as colloidal silica. Suitable mixing processes may include, but are not limited to, mechanical mixing techniques, manual mixing techniques, ultrasonics, cavitation, agitation, combinations comprising these techniques, and the like. For example, representative mechanical mixing techniques may include grinding, ball mixing, high energy milling (e.g., Spex), shear mixing, stirring, centrifugal mixing, combinations comprising at least one of the foregoing, and the like.

Suitable silica based materials may comprise silica, modified silica, and the like. Modified silica may comprise silica modified by other compounds or elements, for example, silicates such as sodium silicate, borosilicates, hafnium silicates, zirconium silicates, and mixtures thereof. These various silica based materials exhibit a viscosity of about 1×10² poise to about 1×10⁷ poise in a temperature range of about 1,292° F (700° C) to about 3,272° F (1,800° C), possess a particle size range of about 150 mesh to about 325 mesh, and form a viscous glass phase material when heat treated that is suitable as a carrier for at least one oxygen scavenger. This viscosity range permits easier inclusion and dispersion of the oxygen scavengers throughout the silica based materials during the coating and heat treatment steps.

The oxidation resistant coating of the present invention provides oxidation resistance primarily by active reaction with oxygen rather than only providing a passive barrier to oxygen flow to an article's surface. As the coating(s) are exposed to oxidative operating conditions, the coating(s) erodes and exposes the oxygen scavenger additives. The oxygen scavengers oxidize to form non-gaseous oxidation products such as SiO₂, Al₂O₃, B₂O₃, etc., which then add to and rebuild the coating. The glassy phase flows at elevated temperature to seal cracks and accommodate mismatches of the coefficient of thermal expansion of the various layers. As a result, the coating in turn resists spallation and cracking and instead relieves the stress caused by the formation of the non-gaseous oxidation products.

The oxygen scavenger may be an element or compound or multiphase component that reacts with oxygen to form a relatively stable, non volatile oxygen-containing compound or phase. Suitable oxygen scavengers may comprise silicides and/or borides of aluminum, molybdenum, tantalum, chromium, titanium, hafnium, zirconium, yttrium, mixtures thereof, and the like. In addition, other refractory metals, and other metals that form refractory oxides, silicates, borides, and mixtures thereof, known to one of ordinary skill in the art may also be utilized as suitable oxygen scavengers. The volume percent of the oxygen scavenger within the layers of coating may preferably be in the range of about 1% to about 90% by volume of the layers of coating, and more preferably in the range of about 5% to about 75% by volume of the layers of coating.

If desirable, a viscosity modifier may be added to the slurry in an amount sufficient to rheologically control the viscosity of the targeted glass phase(s). Suitable viscosity modifiers may include, but are not limited to refractory materials, metal oxides, mixed metal silicates, mixtures thereof, and the like. Optionally, a viscosity modifier additive may be added to the slurry to impart steam resistance to the article. In the alternative, the silica based material may also include, as part of its composition, the viscosity modifier additive. Suitable viscosity modifier additives may include mullite, alkaline earth aluminosilicates including barium strontium aluminosilicate (BSAS) and strontium aluminosilicate (SAS), yttrium silicates, rare earth silicates, hafnium or zirconium silicate, oxides of hafnium, zirconium, titanium, silicon, yttrium, rare earth metals, tantalum, niobium, aluminum and mixtures thereof, and the like. In addition, these viscosity modifier additives may also be used to impart additional steam resistance.

After disposing the slurry containing the bond coat 106 precursors to the CMC substrate 102, it is subjected to heat and pressure to evaporate the liquid components such as solvents and so on. Pressure may be used to facilitate bonding of the bond coat 106 to the CMC substrate 102. Following the formation of the optional bond coat 106, the metal oxide layer 104 is disposed on the bond coat 106 (if present) or directly on the CMC substrate 102. The metal oxide layer 104 is then heat treated to remove solvents (if applied in the form of sol gel solution) and/or to bond the metal oxide layer 104 to the bond coat 106 or to the CMC substrate 102. The CMC substrate 102 with the optional bond coat 106 and the metal oxide layer 104 disposed thereon is referred to herein as a multilayer composite. The multilayer composite is then subjected to laser ablation to create the marking that identifies the part.

The metal oxide layer 104 is then subjected to laser ablation to etch away a portion of the metal oxide layer to create the marking that identifies the part. In an embodiment, the metal oxide layer 104 is etched to the interface with the bond coat 106 or to the interface with the CMC substrate 102 when the bond coat 106 is not used. In another embodiment, the metal oxide layer 104 is etched below the interface of the metal oxide layer 104 with the bond coat 106 and into the portion of the bond coat 106. A portion of the bond coat above the surface of the CMC substrate 102 is left untouched, thus protecting the CMC substrate 102 from any adverse effects of the ablation.

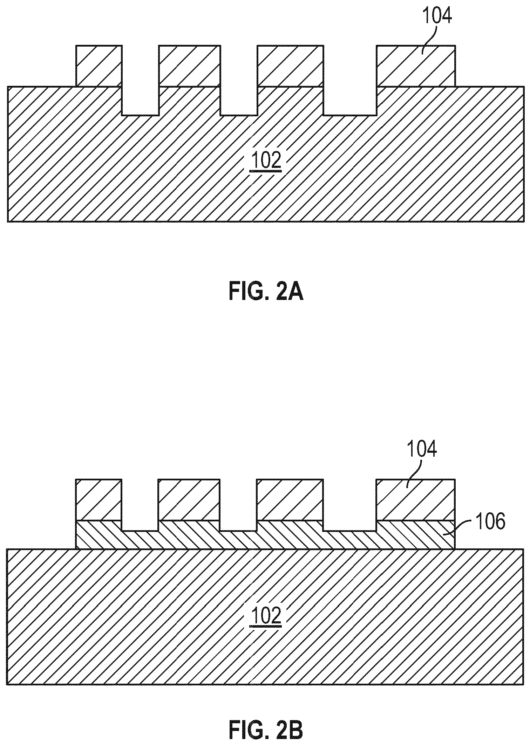

These concepts are depicted in the FIGS. 2A and 2B. The FIG. 2A depicts a single metal oxide layer 104 disposed on the CMC substrate 102. In one embodiment, only a portion of the metal oxide layer 104 (as viewed from the top) is ablated and removed in the process of marking the multilayer composite. In another embodiment, the entire thickness of the metal oxide is ablated and a portion of the CMC may also be ablated in order to form the marking. Both of these are detailed below. Letters, numbers, symbols, bar codes, matrix bar codes (e.g., QR codes also known as quick response codes) or a combination thereof may be ablated into the metal oxide layer to serve as markings for identifying the component.

In one embodiment (not shown), the markings may be developed by ablating the metal oxide (and the bond coat-see FIG. 2B) down into the CMC. A portion of the CMC may be removed during the laser ablation, leaving the portions of the metal oxide (that forms the boundaries of the marking) on the surface of the CMC. Incident light reflected from the ablated surface (from the markings) may be collected and analyzed in order to identify the part.

In another embodiment, in those regions where the metal oxide is contacted by the laser beam almost the entire height (i.e., the thickness) of the material is removed. In this embodiment, during the laser ablation of the metal oxide layer 104 it is desirable to leave the CMC substrate untouched by the laser beam. In other words, the thickness of the metal oxide layer is reduced almost to zero in those regions that are ablated while the surrounding metal oxide is left untouched. A very thin portion of the metal oxide layer 104 (less than 5% of the original thickness, preferably less than 1% of the original thickness) is still in contact with the CMC substrate 102 after the laser ablation. In an exemplary embodiment, the residual coating should be less than 1 micrometer. At 1 micrometer thickness or less, some incident light will transmit through the coating and reflect off of the underlying CMC, giving a different visual appearance, which is used to identify the marking.

In another embodiment, in some cases, a small amount (less than 50% of the coating thickness) is removed from the underlying CMC. The difference in refractive index between the metal oxide layer 104 and the CMC substrate 102 results in different amounts of light being reflected or scattered thus making the markings visible and consequently the component identifiable.

FIG. 2B depicts a single metal oxide layer 104 disposed on the optional bond coat 106 which is itself in contact with the CMC substrate 102. In this case, the laser ablation is conducted through the thickness of the metal oxide layer 104 and into a portion of the thickness of the bond coat 106. The portion of the bond coat 106 that is not removed protects the CMC substrate 102 from degradation that may be caused by the laser beam. The difference in refractive index between the metal oxide layer 104 and the bond coat 106 or the CMC substrate 102 results in different amounts of light being reflected or scattered thus making the markings visible and consequently the component identifiable.

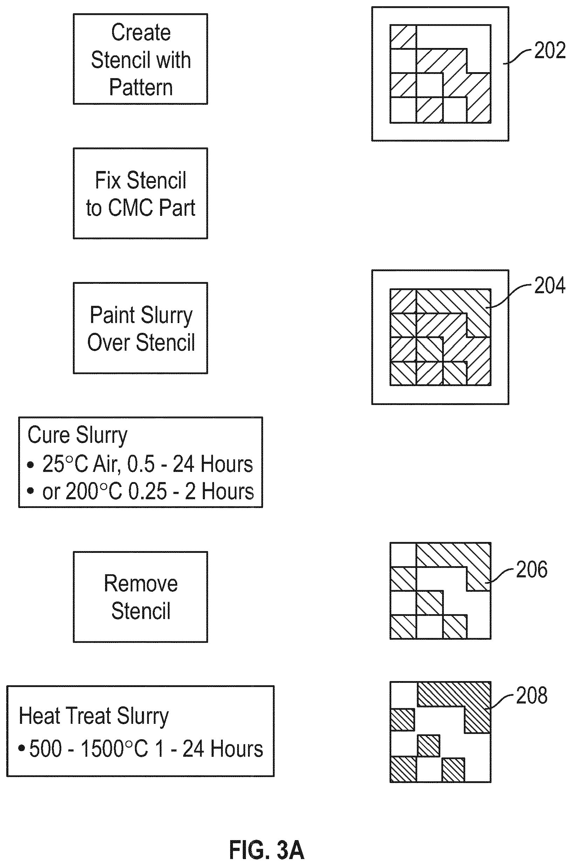

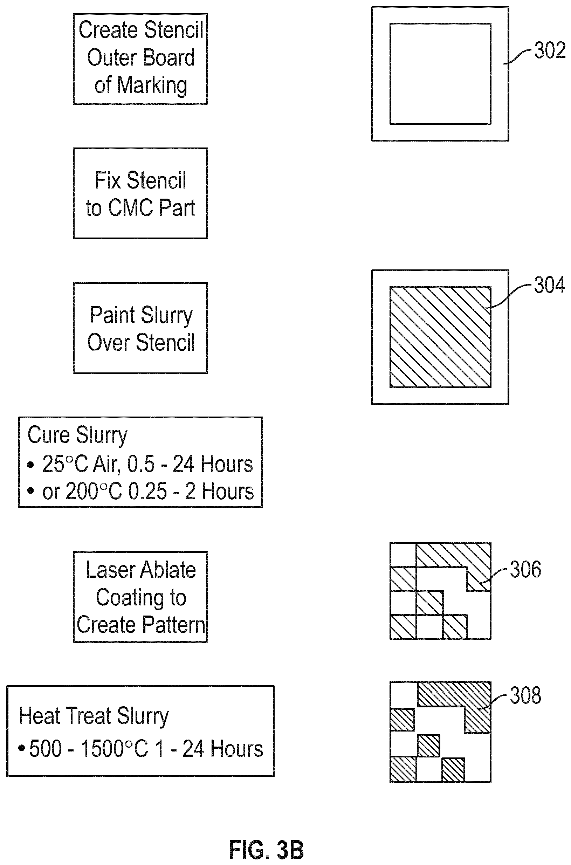

FIGS. 3A and 3B depict different embodiments of methods by which the markings can be performed on an article. FIG. 3A depicts one manner of marking the article without using laser ablation while the FIG. 3B depicts another manner of marking the article using laser ablation.

In FIG. 3A, a stencil 202 is first created with a pattern on the CMC. The stencil 202 is fixed to the CMC part. A metal oxide slurry 204 is painted over the stencil. The slurry 204 is then cured either at room temperature or at an elevated temperature. Curing may be conducted in air at room temperature for a period of 0.5 to 24 hours, preferably 6 to 18 hours. The slurry may alternatively be cured at 200°C for 0.25 to 2 hours, preferably 0.5 to 1 hour. Following curing, the stencil 202 is removed leaving behind a green marking 206. The slurry (which forms the green marking 206) is then heat treated for 500 to 1500°C for a period of 1 to 24 hours to leave behind a metal oxide marking 208.

In FIG. 3B, a stencil outline 302 is first created on the CMC part. The stencil 302 is fixed to the CMC part. A metal oxide slurry 304 is painted over the stencil. The slurry 304 is then cured either at room temperature or at an elevated temperature. Curing may be conducted in air at room temperature for a period of 0.5 to 24 hours, preferably 6 to 18 hours. The slurry may alternatively be cured at 180°C to 220°C for 15 minutes to 2 hours, preferably at 200°C for 15 minutes to 2 hours, preferably 30 minutes to 1 hour. Following curing, laser ablation may be conducted on the slurry to create a green marking 306. The slurry (which forms the green marking 306) is then heat treated for 500 to 1500°C for a period of 1 to 24 hours to leave behind a metal oxide marking 308.

In an embodiment, in one method of reading the marking, a scanning device sends forth a beam of light (e.g., incoherent or laser) that interacts with the marking on the CMC part. A portion of the incident light is reflected back to the scanning device. A photodiode in the scanning device detects how much of the light is reflected back and this reflected light may be used to decipher the marking and identify the part.

This method is advantageous in that it protects the CMC substrate from degradation by the laser beam. The presence of a metal oxide layer as the source of the marking prevents further oxidation of the marking. In the past, oxidative degradation has caused the marking to disappear over time thus making the part unidentifiable.

The method described herein can be used to prepare a variety of components comprising matrix composites such as components in the aviation industry, marine industry and energy industry. Exemplary components include components for gas turbine engines, such as in high pressure compressors (HPC), fans, boosters, high pressure turbines (HPT), and low pressure turbines (LPT). More specifically exemplary components include combustion liners, shrouds, nozzles, stators, vanes, and blades.

## Claims

1. An article (100) comprising:
a substrate (102) that comprises a ceramic matrix composite; and
a metal oxide layer (104) disposed on the substrate (102); where the metal oxide layer (104) has a marking (308) etched into the metal oxide (104) via laser ablation,
**characterised in that**:
the marking (308) includes alphabets, numbers, symbols, bar codes, matrix bar codes, quick response codes, or a combination thereof; and
the ceramic matrix composite comprises a matrix that has a different reflectivity from the metal oxide layer (104).

2. The article (100) of claim 1, further comprising a bond coat (106) disposed between the substrate (102) and the metal oxide layer (104), wherein, optionally, the bond coat (106) is ablated through a portion of its thickness.

3. The article (100) of claim 1, wherein the metal oxide layer (104) is directly in contact with the substrate (102).

4. The article (100) of any preceding claim, wherein the ceramic matrix composite comprises fibers that comprise silicon carbide, oxide ceramics and carbon and wherein the fibers are embedded in a matrix that comprises SiC, Al₂O₃, BN, B₄C, Si₃N₄, MoSi₂, SiO₂, SiOC, SiNC SiONC, ZrC, HfC, or a combination thereof.

5. The article (100) of any preceding claim, wherein the metal oxide layer (104) has a greater reflectivity from that of the matrix material used in the ceramic matrix composite.

6. The article (100) of any preceding claim, wherein the metal oxide layer (104) is ablated through at least 95% entire thickness.

7. The article (100) of claim 6, wherein the metal oxide layer (104) is ablated through at least 99% entire thickness, optionally through its entire thickness.

8. The article (100) of any preceding claim, wherein the metal oxide is a rare earth metal oxide that has a diffuse reflectivity for incident light with wavelength between 400 and 700 nm that is two times greater than the diffuse reflectivity of the ceramic matrix composite, wherein the ceramic matrix composite optionally comprises silicon carbide.

9. A method of marking a ceramic matrix composite (102) comprising:
disposing upon a ceramic matrix composite (102) a metal oxide layer (104); and
laser ablating the metal oxide layer (104) to etch the metal oxide layer (104); where the etching produces markings (308),
**characterised in that**:
the markings (308) comprise alphabets, numbers, symbols, bar codes, matrix bar codes, quick response codes, or a combination thereof; and
the ceramic matrix composite comprises a matrix that has a different reflectivity from the metal oxide layer (104).

10. The method of claim 9, further comprising disposing a bond coat (106) between the ceramic matrix composite (102) and the metal oxide layer (104).

11. The method of claim 9 or 10, wherein the metal oxide layer (104) is ablated through its entire thickness, or wherein the metal oxide layer (104) is ablated through a portion of its entire thickness.

12. The method of any of claims 9 to 11, wherein the metal oxide layer (104) is disposed on the ceramic matrix composite (102) in the form of a slurry (304).

13. The method of claim 12, wherein the slurry (304) is bounded by a stencil (302).

14. The method of claim 12 or 13, wherein:
the slurry (304) is cured by heating it prior to laser ablation; and/or
the metal oxide (104) is heated to 500 to 1500°C for a period of 1 to 24 hours after laser ablation.

15. A method of identifying an article (100) of any of claims 1 to 8 comprising:
illuminating the article (100) with an incident beam of light, wherein the incident beam of light optionally comprises non-coherent light or a laser;
receiving a reflected beam of light from the article (100); and
identifying the article (100) from the reflected beam of light.

## Patentansprüche

1. Gegenstand (100), umfassend:
ein Substrat (102), das einen Verbundwerkstoff mit keramischer Matrix umfasst; und
eine auf dem Substrat (102) aufgebrachte Metalloxidschicht (104); wobei die Metalloxidschicht (104) eine über Laserablation in das Metalloxid (104) geätzte Markierung (308) aufweist,
**dadurch gekennzeichnet, dass**:
die Markierung (308) Schriftzeichen, Zahlen, Symbole, Barcodes, Matrix-Barcodes, QR-Codes oder eine Kombination davon beinhaltet; und
der Verbundwerkstoff mit keramischer Matrix eine Matrix umfasst, die einen anderen Reflexionsgrad aufweist als die Metalloxidschicht (104).

2. Gegenstand (100) nach Anspruch 1, ferner umfassend eine Haftschicht (106), die zwischen dem Substrat (102) und der Metalloxidschicht (104) aufgebracht ist, wobei die Haftschicht (106) gegebenenfalls über einen Teil ihrer Dicke abgetragen ist.

3. Gegenstand (100) nach Anspruch 1, wobei die Metalloxidschicht (104) in direktem Kontakt mit dem Substrat (102) steht.

4. Gegenstand (100) nach einem der vorhergehenden Ansprüche, wobei der Verbundwerkstoff mit keramischer Matrix Fasern umfasst, die Siliciumcarbid, Oxidkeramiken und Kohlenstoff umfassen und wobei die Fasern in einer Matrix eingebettet sind, die SiC, Al₂O₃, BN, B₄C, Si₃N₄, MoSi₂, SiO₂, SiOC, SiNC SiONC, ZrC, HfC oder eine Kombination davon umfasst.

5. Gegenstand (100) nach einem der vorhergehenden Ansprüche, wobei die Metalloxidschicht (104) einen höheren Reflexionsgrad aufweist als das in dem Verbundwerkstoff mit keramischer Matrix verwendete Matrixmaterial.

6. Gegenstand (100) nach einem der vorhergehenden Ansprüche, wobei die Metalloxidschicht (104) über mindestens 95 % ihrer gesamten Dicke abgetragen ist.

7. Gegenstand (100) nach Anspruch 6, wobei die Metalloxidschicht (104) über mindestens 99 % ihrer gesamten Dicke, gegebenenfalls über ihre gesamte Dicke, abgetragen ist.

8. Gegenstand (100) nach einem der vorhergehenden Ansprüche, wobei es sich bei dem Metalloxid um ein Seltenerdmetalloxid handelt, das einen streuenden Reflexionsgrad für einfallendes Licht mit einer Wellenlänge zwischen 400 und 700 nm aufweist, der doppelt so groß ist wie der streuende Reflexionsgrad des Verbundwerkstoffs mit keramischer Matrix, wobei der Verbundwerkstoff mit keramischer Matrix gegebenenfalls Siliciumcarbid umfasst.

9. Verfahren zum Fertigen eines Verbundwerkstoffs mit keramischer Matrix (102), umfassend:
Aufbringen einer Metalloxidschicht (104) auf einen Verbundwerkstoff mit keramischer Matrix (102); und
Laserabladieren der Metalloxidschicht (104) zum Ätzen der Metalloxidschicht (104);
wobei das Ätzen Markierungen (308) produziert,
**dadurch gekennzeichnet, dass**:
die Markierungen (308) Schriftzeichen, Zahlen, Symbole, Barcodes, Matrix-Barcodes, QR-Codes oder eine Kombination davon umfassen; und
der Verbundwerkstoff mit keramischer Matrix eine Matrix umfasst, die einen anderen Reflexionsgrad aufweist als die Metalloxidschicht (104).

10. Verfahren nach Anspruch 9, ferner umfassend Aufbringen einer Haftschicht (106) zwischen dem Verbundwerkstoff mit keramischer Matrix (102) und der Metalloxidschicht (104).

11. Verfahren nach Anspruch 9 oder 10, wobei die Metalloxidschicht (104) über ihre gesamte Dicke abladiert wird oder wobei die Metalloxidschicht (104) über einen Teil ihrer gesamten Dicke abladiert wird.

12. Verfahren nach einem der Ansprüche 9 bis 11, wobei die Metalloxidschicht (104) in Form einer Aufschlämmung (304) auf dem Verbundwerkstoff mit keramischer Matrix (102) aufgebracht wird.

13. Verfahren nach Anspruch 12, wobei die Aufschlämmung (304) durch eine Schablone (302) begrenzt wird.

14. Verfahren nach Anspruch 12 oder 13, wobei:
die Aufschlämmung (304) durch Erwärmen vor der Laserablation ausgehärtet wird; und/oder
das Metalloxid (104) nach der Laserablation für einen Zeitraum von 1 bis 24 Stunden auf 500 bis 1500 °C erwärmt wird.

15. Verfahren zum Identifizieren eines Gegenstands (100) nach einem der Ansprüche 1 bis 8, umfassend:
Beleuchten des Gegenstands (100) mit einem einfallenden Lichtstrahl, wobei der einfallende Lichtstrahl gegebenenfalls nicht kohärentes Licht oder einen Laser umfasst;
Empfangen eines reflektierten Lichtstrahls von dem Gegenstand (100); und
Identifizieren des Gegenstands (100) anhand des reflektierten Lichtstrahls.

## Revendications

1. Article (100) comprenant :
un substrat (102) qui comprend un composite à matrice céramique ; et
une couche d'oxyde métallique (104) disposée sur le substrat (102) ; où la couche d'oxyde métallique (104) a un marquage (308) gravé dans l'oxyde métallique (104) par ablation laser,
**caractérisé en ce que** :
le marquage (308) comporte des alphabets, des chiffres, des symboles, des codes-barres, des codes-barres matriciels, des codes de réponse rapide, ou une combinaison de ceux-ci ; et
le composite à matrice céramique comprend une matrice qui a une réflectivité différente de celle de la couche d'oxyde métallique (104).

2. Article (100) selon la revendication 1, comprenant également un revêtement de liaison (106) disposé entre le substrat (102) et la couche d'oxyde métallique (104), dans lequel, éventuellement, le revêtement de liaison (106) est ablaté sur une partie de son épaisseur.

3. Article (100) selon la revendication 1, dans lequel la couche d'oxyde métallique (104) est directement en contact avec le substrat (102).

4. Article (100) selon une quelconque revendication précédente, dans lequel le composite à matrice céramique comprend des fibres qui comprennent du carbure de silicium, des céramiques d'oxyde et du carbone et dans lequel les fibres sont incorporées dans une matrice qui comprend SiC, Al₂O₃, BN, B₄C, Si₃N₄, MoSi₂, SiO₂, SiOC, SiNC SiONC, ZrC, HfC, ou une combinaison de ceux-ci.

5. Article (100) selon une quelconque revendication précédente, dans lequel la couche d'oxyde métallique (104) a une réflectivité supérieure à celle du matériau de matrice utilisé dans le composite à matrice céramique.

6. Article (100) selon une quelconque revendication précédente, dans lequel la couche d'oxyde métallique (104) est ablatée sur au moins 95 % de son épaisseur totale.

7. Article (100) selon la revendication 6, dans lequel la couche d'oxyde métallique (104) est ablatée sur au moins 99 % de son épaisseur totale, éventuellement sur toute son épaisseur.

8. Article (100) selon une quelconque revendication précédente, dans lequel l'oxyde métallique est un oxyde métallique de terre rare qui a une réflectivité diffuse pour la lumière incidente d'une longueur d'onde entre 400 et 700 nm qui est deux fois supérieure à la réflectivité diffuse du composite à matrice céramique, dans lequel le composite à matrice céramique comprend éventuellement du carbure de silicium.

9. Procédé de marquage d'un composite à matrice céramique (102) comprenant :
la disposition sur un composite à matrice céramique (102) d'une couche d'oxyde métallique (104) ; et
l'ablation laser de la couche d'oxyde métallique (104) pour graver la couche d'oxyde métallique (104) ;
où la gravure produit des marquages (308),
**caractérisé en ce que** :
les marquages (308) comprennent des alphabets, des chiffres, des symboles, des codes-barres, des codes-barres matriciels, des codes de réponse rapide, ou une combinaison de ceux-ci ; et
le composite à matrice céramique comprend une matrice qui a une réflectivité différente de celle de la couche d'oxyde métallique (104).

10. Procédé selon la revendication 9, comprenant également la disposition d'un revêtement de liaison (106) entre le composite à matrice céramique (102) et la couche d'oxyde métallique (104).

11. Procédé selon la revendication 9 ou 10, dans lequel la couche d'oxyde métallique (104) est ablatée sur toute son épaisseur, ou dans lequel la couche d'oxyde métallique (104) est ablatée sur une partie de son épaisseur totale.

12. Procédé selon l'une quelconque des revendications 9 à 11, dans lequel la couche d'oxyde métallique (104) est disposée sur le composite à matrice céramique (102) sous la forme d'une suspension (304).

13. Procédé selon la revendication 12, dans lequel la suspension (304) est délimitée par un pochoir (302).

14. Procédé selon la revendication 12 ou 13, dans lequel :
la suspension (304) est durcie par chauffage avant l'ablation laser ; et/ou
l'oxyde métallique (104) est chauffé de 500 à 1500°C pendant une période de 1 à 24 heures après l'ablation laser.

15. Procédé d'identification d'un article (100) de l'une quelconque des revendications 1 à 8 comprenant :
l'éclairage de l'article (100) avec un faisceau lumineux incident, dans lequel le faisceau lumineux incident comprend éventuellement une lumière non cohérente ou un laser ;
la réception d'un faisceau de lumière réfléchi par l'article (100) ; et
l'identification de l'article (100) à partir du faisceau de lumière réfléchi.
